# EUROPEAN PATENT SPECIFICATION

(11) **EP 3 495 636 B1**
(45) Date of publication and mention of the grant of the patent: **19.05.2021**
(21) Application number: 18209943.2
(22) Date of filing: 03.12.2018
(51) Int. Cl.: F02B 19/12, F02B 19/10, F02B 23/08, F02F 1/24, F02M 61/14, F02M 57/06

(54) **CYLINDER HEAD FOR ENGINE**
ZYLINDERKOPF FÜR MOTOR
CULASSE POUR MOTEUR

(30) Priority: 05.12.2017 GB 201720219
(43) Date of publication of application: 12.06.2019
(73) Proprietor: Caterpillar Energy Solutions GmbH, 68167 Mannheim (DE)
(72) Inventor: TRINKEL, Ralf, 67134 Birkenheide (DE)
(74) Representative: BRP Renaud & Partner mbB Rechtsanwälte Patentanwälte Steuerberater

(56) References cited:
- EP-A1- 0 902 175
- CN-Y- 2 160 759
- GB-A- 384 496
- JP-A- H09 158 727
- US-A- 4 364 342
- US-A1- 2014 209 057

## Description

### Technical Field

The present disclosure generally relates to an engine. More particularly, the present disclosure relates to a cylinder head for the engine that shields a pre-chamber from high temperatures of combustion.

### Background

Internal combustion engines often emit oxides of nitrogen ("NOₓ") during operation. To minimize emission of such oxides of nitrogen and improve the efficiency of the combustion process, some internal combustion engines incorporate a pre-combustion chamber, or a pre-chamber. Pre-chambers may be coupled to a cylinder head of the engine. In pre-chambers, either enriched or non-enriched fuel is advanced and then ignited to create a jet of burning fuel. The pre-chamber generally includes a tip that extends into a main combustion chamber of the engine for introducing the burning fuel jets into the main combustion chamber of the internal combustion engine.

In some cases, the cylinder head may be deformed and/or degraded due to high ignition pressures and/or temperatures developed within the combustion chamber. Such deformation and/or degradation of the cylinder head may disturb the arrangement of the pre-chamber and cylinder head assembly. Thereby, decreasing an efficiency of the engine. Moreover, since the pre-chamber tip protrudes into the combustion chamber, the tip is exposed to the heat of combustion, causing injector wear and eventually rendering the pre-chamber unfit to perform its intended function.

US patent publication 2016/0230647A1 is directed to a piston for a pre-chamber type gas engine. US 2016/0230647A1 discloses an engine having a pre-chamber including a plurality of orifices on its tip. The tip extends into the combustion chamber and facilitates fluid communication between the pre-chamber and the combustion chamber Assemblies comprising a pre-chamber and a cylinder head are known from EP0902175 A1, GB384496 A and JPH09158727 A.

### Summary of the Invention

In an aspect of the present disclosure, a cylinder head according to claim 1 is disclosed.

### Brief Description of the Drawings

FIG. 1 is a diagrammatic cross-sectional illustration of an exemplary engine, in accordance with an embodiment of the present disclosure;
FIG. 2 is a cross sectional view of a portion of the engine, in accordance with an embodiment of the present disclosure;
FIG. 3 illustrates a perspective cross sectional view of a cylinder head of the engine, in accordance with an embodiment of the present disclosure;
FIG. 4 illustrates a perspective view of the cylinder head of the engine, in accordance with an embodiment of the present disclosure;
FIG. 5 illustrates a perspective cross sectional view of the cylinder head, in accordance with another embodiment of the present disclosure;
FIG. 6 illustrates a cross sectional view of the cylinder head, in accordance with another embodiment of the present disclosure;
FIG. 7 illustrates a perspective cross sectional view of the cylinder head, in accordance with another embodiment of the present disclosure;
FIG. 8 illustrates a cross sectional view of a pre-chamber implemented in the engine, in accordance with an embodiment of the present disclosure; and
FIG. 9 illustrates a cross sectional view of a pre-chamber implemented in the engine, in accordance with another embodiment of the present disclosure.

### Detailed Description

Reference will now be made in detail to embodiments of the disclosure, examples of which are illustrated in the accompanying drawings. Wherever possible, the same reference numbers will be used throughout the drawings to refer to the same or like parts.

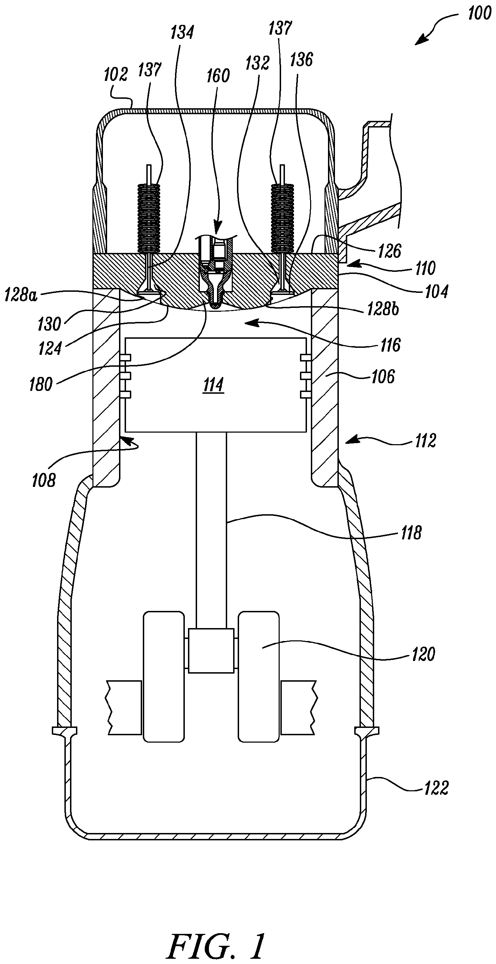

FIG. 1 illustrates an exemplary engine 100. The engine 100 may be any engine running on solid, liquid or gaseous fuel, used for various purposes such as, but not limited to, production of power for a marine vessel, an automobile, a construction machine, any transportation vehicle, and the like. For example, the engine 100 may be an internal combustion engine running on a hydrocarbon fuel.

The engine 100 may include an outer cover 102. The outer cover 102 is configured to shroud the engine 100 and various components of the engine 100 (as described below).

The engine 100 further includes a cylinder head 104 and a cylinder block 106. The cylinder block 106 defines a cylinder bore 108 extending from a first end 110 of the cylinder block 106 to a second end 112 of the cylinder block 106. The cylinder bore 108 may be configured to receive a piston 114. The cylinder head 104 is disposed on the first end 110 of the cylinder block 106 such that the cylinder head 104, the cylinder bore 108 in the cylinder block 106, and the piston 114, define a main combustion chamber 116. The main combustion chamber 116 may be defined as a variable volume enclosure defined (formed) by the cylinder head 104, the cylinder bore 108 in the cylinder block 106 and the piston 114.

The main combustion chamber 116 is configured to receive an intake charge i.e. one or more of air jets, fuel jets, EGR, etc. The piston 114 is configured to reciprocate within the cylinder bore 108 between a top dead center (the uppermost position of the piston 114 in the cylinder bore 108) and a bottom dead center (the lowermost position of piston 114 in the cylinder bore 108), during engine operation. The piston 114 may be pivotably coupled to a connecting rod 118. The piston 114 slides or reciprocates within the cylinder bore 108 between the top dead center and the bottom dead center. This reciprocating movement of the piston 114 causes a crankshaft 120, assembled within a crankcase 122, to rotate and produce mechanical work.

The piston 114 may include a piston head that may receive and/or may be exposed to combustion gases (i.e. the gases generated on burning of the air and/or fuel jets) generated within the main combustion chamber 116. The combustion gases may move the piston 114 (between the top dead center position and the bottom dead center position) and transmit a driving force generated by the combustion event to the crankshaft 120. In the embodiment illustrated in FIG. 1 only one cylinder bore 108 and one piston 114 have been illustrated. Accordingly, only one main combustion chamber 116 is illustrated in FIG. 1. However, it may be contemplated that in various other embodiments, the cylinder block 106 may include a plurality of cylinder bores, similar to the cylinder bore 108, and each such cylinder bore may be configured to receive a piston similar to the piston 114. In such a configuration, the cylinder head 104, the plurality of cylinder bores (including the cylinder bore 108) and the plurality of pistons (including the piston 114) may define a plurality of main combustion chambers, similar to the main combustion chamber 116.

The cylinder head 104 may include a flame deck surface 124 and an outer head surface 126 defining a width of the cylinder head 104 therebetween. The flame deck surface 124, the cylinder bore 108 and the piston 114 define the main combustion chamber 116. The outer head surface 126 may define one or more valve openings 128a, 128b for receiving a valve. The valve openings 128a, 128b may be in fluid communication with an intake port 130 and an exhaust port 132, respectively, formed in the cylinder head 104 of the engine 100. Particularly, an intake valve 134 and an exhaust valve 136 may be operably disposed at least partially and respectively in the valve openings 128a, 128b. The intake valve 134 and/or the exhaust valve 136 may have a spring or an elastic element 137. The spring element 137 may be configured to bias the associated intake valve 134/exhaust valve 136 to a closed position. In various other embodiments, the spring element 137 may be any other type of biasing mechanism that can be used to bias the intake valve 134/exhaust valve 136 to their closed positions.

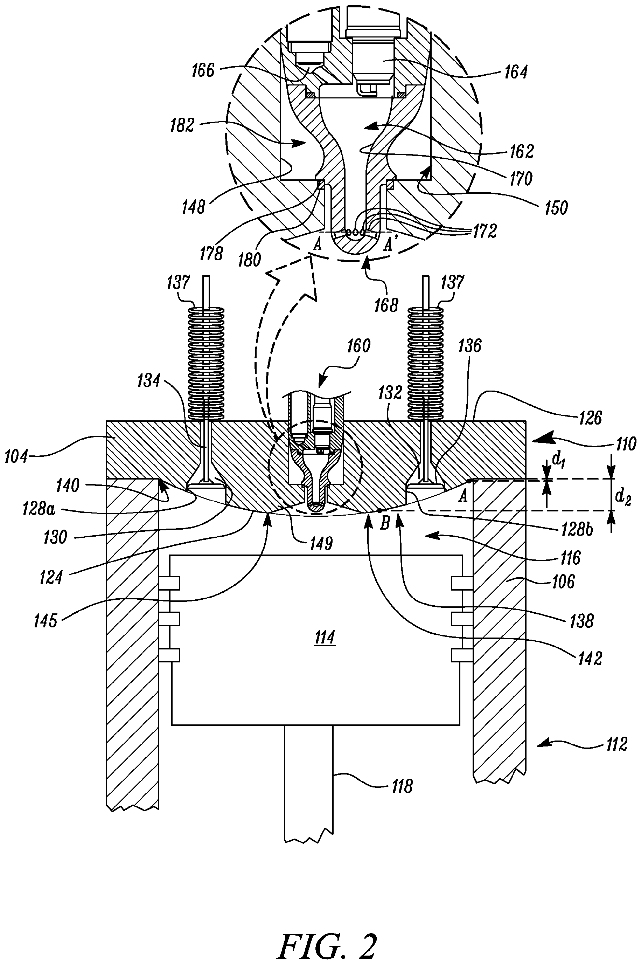

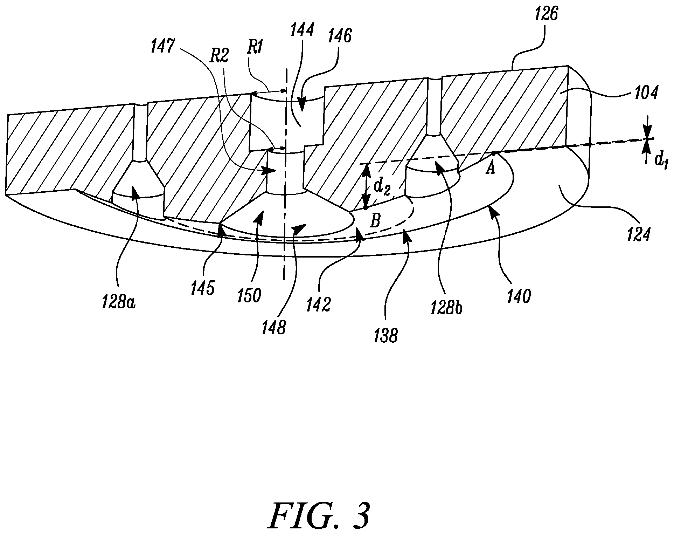

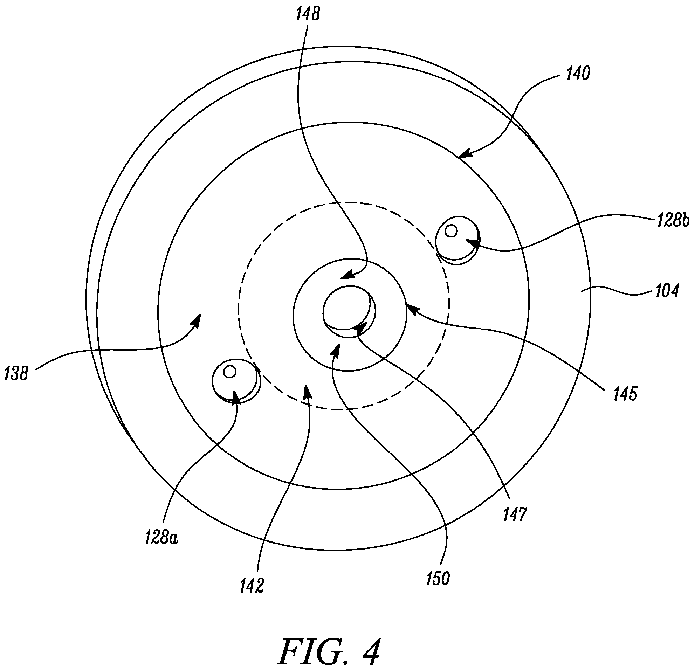

Referring to FIG. 2 and FIG. 3, the flame deck surface 124 defines a profile 138. The profile 138 extends into the main combustion chamber 116 when the cylinder head 104 is assembled on the first end 110 of the cylinder block 106. The flame deck surface 124 further defines an outer periphery 140 i.e. portion of the flame deck surface 124 corresponding to the outermost region of the flame deck surface 124. The flame deck surface 124 further includes a central portion 142 (portion of the flame deck surface 124 corresponding to the central region of the flame deck surface 124 i.e. the portion of the flame deck surface 124 lying within the dotted circle, as shown in FIG. 3 and FIG. 4). The profile 138 of the flame deck surface 124 is defined such that a depth of extension of the profile 138 into the main combustion chamber 116 is minimum at the outer periphery 140. Further, the profile 138 is such that the depth of extension of the flame deck surface 124 increases from the outer periphery 140 towards the central portion 142. For example, referring back to FIG. 2 and FIG. 3, if 'd1' is the depth of extension of the profile 138 at a point 'A' lying on the outer periphery 140 and 'd2' is the depth of extension of the profile 138 at a point 'B' lying in the central portion 142, then due to the configuration as discussed above 'd1' < 'd2' (best shown in FIG. 2).

In the embodiment illustrated as shown in FIG. 3, the cylinder head 104 further includes an internal surface 144 defining a through-hole 150 extending from the flame deck surface 124 to the outer head surface 126 of the cylinder head 104 (i.e., the through-hole 150 extends through the width of the cylinder head 104). The internal surface 144 may define the through-hole 150 such that the through-hole 150 may take a cylindrical shape proximal to the outer head surface 126 and may take a frusto-conical shape proximal to the flame deck surface 124.

For example, the internal surface 144 may include a first portion 146, a second portion 147 and a third portion 148. The first portion 146 of the internal surface 144 may define a bore of radius 'R1' extending from the outer head surface 126 into the width of the cylinder head 104. The second portion 147 of the internal surface 144 may define a bore of radius 'R2' (R2 < R1) extending into the width of the cylinder head 104 from an end of the bore of radius 'R1' towards the flame deck surface 124. The third portion 148 of the internal surface 144 may define the conical shaped portion of the through-hole 150 extending from an end of the bore of radius 'R2' towards the flame deck surface 124. The conical shaped portion of the through-hole 150 may be defined as a bore where the radius of the bore increases in a direction towards the flame deck surface 124 to form a diverging frusto-conical portion of through-hole 150 proximal to the flame deck surface 124.

In the embodiment illustrated, the through-hole 150 extends through the width of the cylinder head 104 from the central portion 142 to the outer head surface 126, as shown in FIG. 3 and FIG. 4. In such a configuration, the profile 138 may be defined such that the depth of extension of the profile 138 into the main combustion chamber 116 is minimum at the outer periphery 140 and the depth of extension of the profile 138 increases towards the through-hole 150 defined in the cylinder head 104.

The depth of extension of the profile 138 increases in the direction from the outer periphery 140 to the through-hole 150 and/or central portion 142. Accordingly, a portion of the central portion 142 having highest depth of extension into the main combustion chamber 116 is formed around an end of the through-hole 150 present at the flame deck surface 124. For example, the central portion 142 may form an apex portion 145 surrounding the end of the through-hole 150 (the apex portion 145 being a portion of the flame deck surface 124 that has the highest depth of extension into the main combustion chamber 116).

In the embodiment illustrated, the flame deck surface 124 is a convex shaped surface. In such a configuration, the flame deck surface 124 defines an arcuate (i.e. convex) profile 138 such that depth of extension of the profile 138 into the main combustion chamber 116 increases towards the central portion 142 due to the convex shape taken by the flame deck surface 124. While a convex profile 138 has been illustrated in figures of the current disclosure, it may be contemplated that in various other embodiments non-arcuate profile 138 may be defined by the flame deck surface 124. For example, the profile 138 may be a conical profile that converges as a cone from the outer periphery 140 to the central portion 142.

The engine 100 further includes a pre-chamber 160 configured to supply one or more fuel charges (i.e. fuel jets, air and fuel jets or burning fuel-air mixtures) into the main combustion chamber 116. The pre-chamber 160 includes a mixing enclosure 162, an ignition plug 164, a fuel source 166 and a tip 168. The pre-chamber 160 includes an internal chamber surface 170 defining a mixing enclosure 162. The mixing enclosure 162 may be in fluid communication with the fuel source 166. The fuel source 166 may be configured to introduce fuel (i.e. any fuel petrol, diesel, gasoline, LPG, CNG and the like) into the mixing enclosure 162. The fuel source 166 may be a fuel injector or any other type of fuel introducing system known in the art.

The ignition plug 164 may be provided in the mixing enclosure 162 and may be configured to ignite the fuel introduced into the mixing enclosure 162. The ignition plug 164 may be a typical J-gap spark plug, rail plug, extended electrode, or laser plug or any other type of spark plug known in the art.

The tip 168 may be configured to transfer burning air-fuel jets i.e. burning fuel charges from the pre-chamber 160 to the main combustion chamber 116. The tip 168 of the pre-chamber 160 includes a plurality of orifices 172. The tip 168 of the pre-chamber 160 may be received within through-hole 150 of the cylinder head 104 such that the tip 168 does not extend beyond the apex portion 145 of the flame deck surface 124. In such a configuration, the apex portion 145 extending beyond the tip 168 of the pre-chamber 160 into the main combustion chamber 116 absorbs the high temperatures of combustion generated within the main combustion chamber 116, thereby, shielding the pre-chamber's 160 tip 168 from the combustion temperatures.

In an embodiment, the tip 168 may include a flanged portion 178 (i.e., a portion of the tip 168 having a radially extending contour) as shown in FIG. 2. The flanged portion 178 may abut the second portion 147 of the internal surface 144 and form an enclosure 182 around the tip 168. The enclosure 182 may act as a coolant chamber and receive one or more fluids configured to absorb the heat transmitted from the main combustion chamber 116 in a direction towards the pre-chamber 160. The absorption of heat by the one or more fluids present in enclosure 182 (coolant chamber) reduces the amount of heat transmitted from the main combustion chamber 116 to the pre-chamber 160. In an embodiment, a seal 180 may be disposed between the flanged portion 178 and the second portion 147 to prevent fluid communication between the enclosure 182 i.e. the coolant chamber and the main combustion chamber 116. Thereby fluidly isolating the enclosure 182 (coolant chamber) and preventing leakage of the one or more heat absorbing fluids accumulated therein.

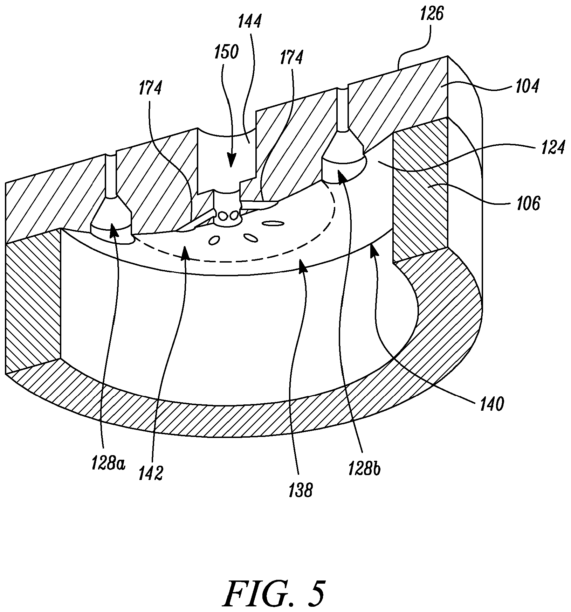

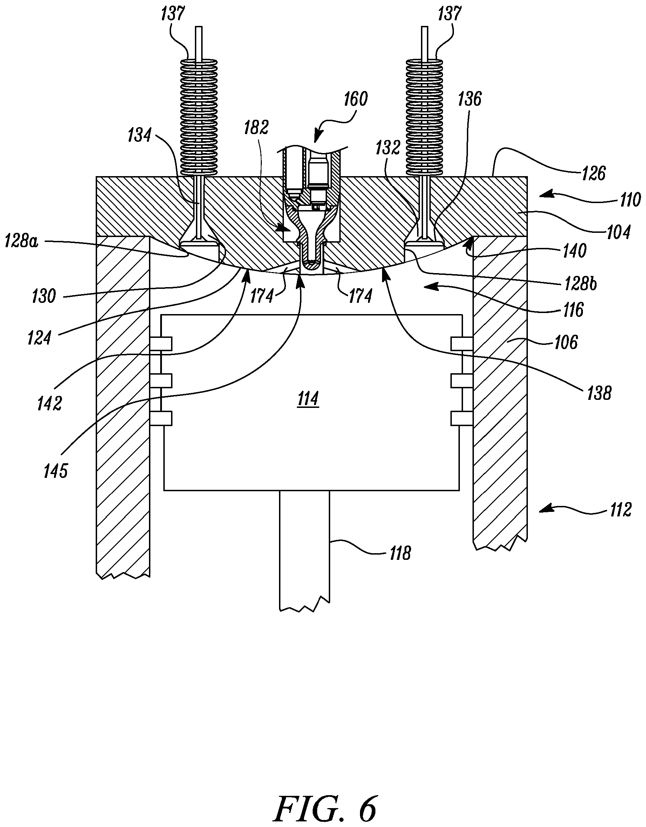

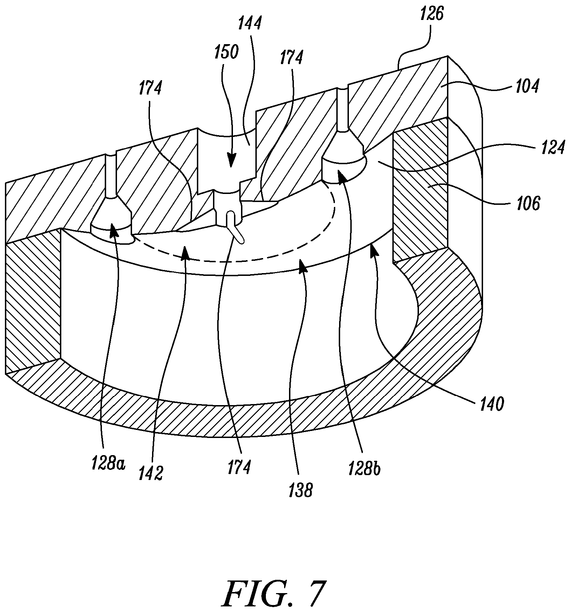

While the through-hole 150 is illustrated as a partial cylindrical and partial frusto-conical shaped through-hole, in various other embodiments, the through-hole 150 may take other shapes such as a shape complementary to the shape of the pre-chamber 160 and the tip 168 as illustrated in FIG. 5. In cylinder heads 104 having such through-holes 150 there may exist one or more internal passages 174 extending from through-hole 150 to the flame deck surface 124 as shown in FIG. 5 and FIG. 6. In one embodiment, each of the one or more internal passages 174 may be cylindrical passageways formed within the cylinder head 104. In one embodiment, each of the one or more internal passages 174 may be frusto-conical passageways formed within the cylinder head 104. The pre-chamber 160 may be received within the through-hole 150 such that the one or more internal passages 174 align with the plurality of orifices 172 of the pre-chamber 160 and receive fuel charges from the plurality of orifices 172 present on the tip 168 of the pre-chamber 160. In an alternate embodiment, the one or more internal passages 174 may be embodied as grooves, as illustrated in FIG. 7. Such one or more internal passages 174 receive fuel charges from the plurality of orifices 172 present on the tip 168 of the pre-chamber 160 and facilitate unobstructed paths for the fuel charges to move from the pre-chamber 160 to the main combustion chamber 116.

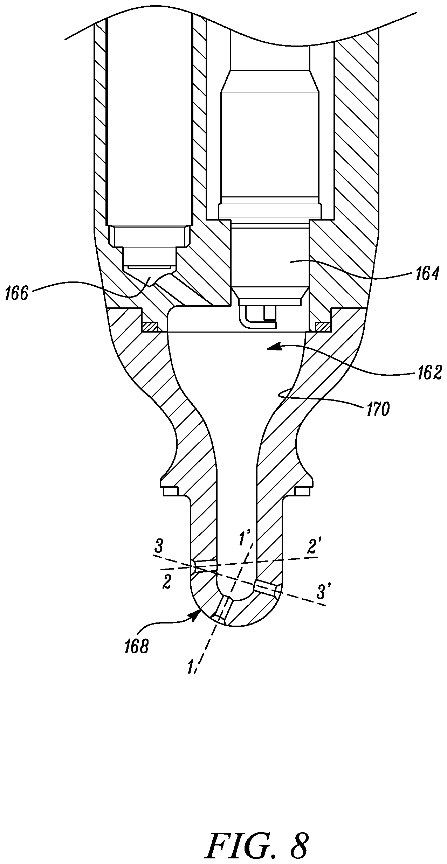

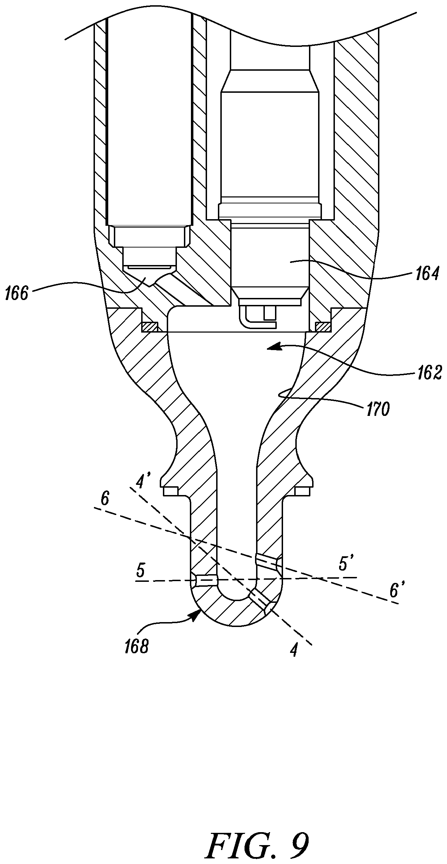

In the embodiment illustrated in FIG. 2, the pre-chamber 160 includes openings of the plurality of orifices 172 in the common plane i.e. concentrically distributed on the tip 168 along a plane defined by the line A-A' (i.e. plane defined by when line A-A' extends into the plane of the paper). However, in various other embodiments, as illustrated in FIG. 8 and FIG. 9, the pre-chamber 160 includes the plurality of orifices 172 arranged at different planes and in different orientations on the tip 168 of the pre-chamber 160. For example, in FIG. 8, the pre-chamber 160 may have one orifice 172 in the plane defined by the line 1-1', another orifice 172 in the plane defined by line 2-2' and another orifice 172 in the plane defined by line 3-3'. In another example, as illustrated in FIG. 9, the pre-chamber 160 may have one orifice 172 in the plane defined by line 4-4', another orifice 172 in the plane defined by line 5-5' and another orifice 172 in the plane defined by line 6-6'. Such an arrangement of the orifices 172 in different planes leads to more pre-chamber's 160 material being present between the orifices 172. This leads to increased strength as the extra material leads to an increased resistance to deformity by the high temperatures of the main combustion chamber 116. Thereby, prolonging life of the pre-chamber 160's tip 168.

### Industrial Applicability

Internal combustion engines often emit oxides of nitrogen ("NOₓ") during operation. To minimize emission of such oxides of nitrogen and improve the efficiency of the combustion process, some internal combustion engines incorporate a pre-combustion chamber, or a pre-chamber. Pre-chambers may be coupled to a cylinder head of the engine. In pre-chambers, either enriched or non-enriched fuel is advanced and then ignited to create a jet of burning fuel. The pre-chamber includes a tip that extends into a main combustion chamber of the engine for introducing the burning fuel jets into the main combustion chamber. Since the pre-chamber tip protrudes into the combustion chamber, the tip is exposed to the heat of combustion, causing injector wear and eventually rendering the pre-chamber unfit to perform its intended function.

In an aspect of the present disclosure, the cylinder head 104 for the engine 100 that shields the pre-chamber 160 from high temperatures of combustion is disclosed. The cylinder head 104 includes the through-hole 150 that extends through the width of the cylinder head 104. The cylinder head 104 further includes the flame deck surface 124 defining the profile 138. The profile 138 is defined such that when the cylinder head 104 is assembled on the first end 110 of the cylinder block 106, the depth of extension of the profile 138 into the main combustion chamber 116 is minimum at the outer periphery 140 and said depth of the flame deck surface 124 increases towards the through-hole 150. In such an assembly, the pre-chamber 160 is received within the through-hole 150 such that the tip 168 of the pre-chamber 160 is in fluid communication with the main combustion chamber 116 and the tip 168 extends into the main combustion chamber 116.

The tip 168 however does not extend beyond the flame deck surface 124 adjacent to the through-hole 150 on the flame deck surface 124. Accordingly, some portion of the flame deck surface 124 extends beyond the tip 168 of the pre-chamber 160 into the main combustion chamber 116. The presence of material of the cylinder head 104 extending beyond the tip 168 of the pre-chamber 160 absorbs the high temperatures of combustion generated within the main combustion chamber 116, thereby, shielding the tip 168 from extreme temperature conditions. Such a configuration of the cylinder head 104, decreases pre-chamber 160's wear and prolongs the life of the pre-chamber 160 and the tip 168.

As disclosed above, the through-hole 150 takes a frusto-conical shape towards the flame deck surface 124, as illustrated in FIG. 2. In such a configuration of the through-hole 150, the fuel jets from the pre-chamber 160 to the main combustion chamber 116 encounter no obstruction and pass unimpeded into the main combustion chamber 116.

Further, as discussed above, in one embodiment, the one or more internal passages 174 may extend from through-hole 150 to the flame deck surface 124 as shown in FIG. 5, FIG. 6 and FIG. 7. Such one or more internal passages 174 may facilitate unobstructed paths for the fuel charges to move from the pre-chamber 160 to the main combustion chamber 116. Further, in such configurations the cylinder head 104 consists of additional material surrounding the tip 168 and extending beyond the tip 168 into the main combustion chamber 116. The additional material in the cylinder head 104 increases the temperature absorption capacity, thereby, prolonging the life of the pre-chamber 160.

While aspects of the present disclosure have seen particularly shown and described with reference to the embodiments above, it will be understood by those skilled in the art that various additional embodiments may be contemplated by the modification of the disclosed machines, systems and methods without departing from the scope of the present disclosure as determined based upon the claims.

## Claims

1. An assembly comprising a pre-chamber (160) and a cylinder head (104), the cylinder head (104) configured to be assembled in use to one end of a cylinder block of an engine (100), the cylinder block (106) having a cylinder bore (108) and a piston (114) received therein to define a main combustion chamber (116);
the pre-chamber (160) including:
an internal chamber surface (170), and
a tip (168);
the internal chamber surface (170) defining a mixing enclosure (162);
the tip (168) of the pre-chamber (160) including a plurality of orifices (172) configured in use to transfer burning air-fuel jets from the pre-chamber (160) to the main combustion chamber (116);
the cylinder head (104) comprising:
an internal surface (144) defining a through-hole (150) that extends through a width of the cylinder head (104), and
a flame deck surface (124) defining a profile (138) extending in use into the main combustion chamber (116) and defining an outer periphery (140), wherein a depth of extension of the profile (138) into the main combustion chamber (116) is minimum at the outer periphery (140) and said depth of the flame deck surface (124) increases towards the through-hole (150);
the pre-chamber (160) being coupled to the cylinder head (104) such that the tip (168) of the pre-chamber (160) is received in the through-hole (150);
**characterised in that**
an apex portion (145) of the flame deck surface (124) extends, in use, beyond the tip (168) of the pre-chamber (160) into the main combustion chamber (116).

2. The assembly of claim 1 wherein,
the flame deck surface (124) includes a central portion (142) and the through-hole (150) passes through the central portion (142).

3. The assembly of claim 1 wherein the through-hole (150) is a frusto-conical through-hole (150) that diverges towards the main combustion chamber (116).

4. The assembly of claim 1, the cylinder head (104) further comprising one or more internal passages (174) configured to at least partially receive fuel charges injected by the pre-chamber (160) wherein the one or more internal passages (174) are one of cylindrical passageways or divergent frusto-conical passageways.

5. The assembly of claim 1 wherein the flame deck surface (124) has a convex shape and the apex portion (145) is formed adjacent the through-hole (150) present in the cylinder head (104).

6. An engine (100) comprising:
a piston (114);
a cylinder block (106) defining a cylinder bore (108), the cylinder bore (108) configured to receive the piston (114); and
an assembly as defined in claim 1;
the cylinder head (104) being disposed at one end of the cylinder block such that the cylinder head (104), the piston (114) and the cylinder bore (108) define a main combustion chamber (116).

7. The engine (100) of claim 6 wherein the flame deck surface (124) includes a central portion (142) and the through-hole (150) passes through the central portion (142).

8. The engine (100) of claim 6 wherein the tip (168) of the pre-chamber (160) includes a plurality of orifices (172) arranged at different planes and in different orientations on the tip (168) of the pre-chamber (160).

9. The engine (100) of claim 6 wherein the flame deck surface (124) has a convex shape and wherein the apex portion (145) is formed adjacent the through-hole (150) present in the cylinder head (104).

## Patentansprüche

1. Baugruppe, umfassend eine Vorkammer (160) und einen Zylinderkopf (104), wobei der Zylinderkopf (104) konfiguriert ist, um bei Verwendung an einem Ende eines Zylinderblocks eines Motors (100) montiert zu sein, wobei der Zylinderblock (106) eine Zylinderbohrung (108) und einen darin aufgenommenen Kolben (114) aufweist, um eine Hauptbrennkammer (116) zu definieren;
wobei die Vorkammer (160) einschließt:
eine innere Kammeroberfläche (170) und
eine Spitze (168);
wobei die innere Kammeroberfläche (170) ein Mischgehäuse (162) definiert;
wobei die Spitze (168) der Vorkammer (160) eine Vielzahl von Öffnungen (172) einschließt, die bei Verwendung konfiguriert sind, um brennende Luft-KraftstoffStrahlen von der Vorkammer (160) zu der Hauptbrennkammer (116) zu übertragen;
wobei der Zylinderkopf (104) umfasst:
eine innere Oberfläche (144), die ein Durchgangsloch (150) definiert, das sich durch eine Breite des Zylinderkopfs (104) erstreckt, und
eine Flammendeckfläche (124), die ein Profil (138) definiert, das sich bei Verwendung in die Hauptbrennkammer (116) hinein erstreckt und einen Außenumfang (140) definiert, wobei eine Erstreckungstiefe des Profils (138) in die Hauptbrennkammer (116) am Außenumfang (140) minimal ist und die Tiefe der Flammendeckfläche (124) in Richtung des Durchgangslochs (150) zunimmt;
wobei die Vorkammer (160) derart mit dem Zylinderkopf (104) gekoppelt ist, dass die Spitze (168) der Vorkammer (160) in dem Durchgangsloch (150) aufgenommen ist;
**dadurch gekennzeichnet, dass**
ein Scheitelabschnitt (145) der Flammendeckfläche (124) sich bei Verwendung über die Spitze (168) der Vorkammer (160) hinaus in die Hauptbrennkammer (116) erstreckt.

2. Baugruppe nach Anspruch 1, wobei
die Flammendeckfläche (124) einen zentralen Abschnitt (142) einschließt und das Durchgangsloch (150) durch den zentralen Abschnitt (142) verläuft.

3. Baugruppe nach Anspruch 1, wobei das Durchgangsloch (150) ein kegelstumpfförmiges Durchgangsloch (150) ist, das in Richtung der Hauptbrennkammer (116) divergiert.

4. Baugruppe nach Anspruch 1, wobei der Zylinderkopf (104) ferner einen oder mehrere interne Kanäle (174) umfasst, die so konfiguriert sind, dass sie zumindest teilweise von der Vorkammer (160) eingespritzte Kraftstoffladungen aufnehmen, wobei der eine oder die mehreren internen Kanäle (174) entweder zylindrische Kanäle oder divergierende kegelstumpfförmige Kanäle sind.

5. Baugruppe nach Anspruch 1, wobei die Flammendeckfläche (124) eine konvexe Form aufweist und der Scheitelabschnitt (145) angrenzend an das im Zylinderkopf (104) vorhandene Durchgangsloch (150) ausgebildet ist.

6. Motor (100), umfassend:
einen Kolben (114);
einen Zylinderblock (106), der eine Zylinderbohrung (108) definiert, wobei die Zylinderbohrung (108) konfiguriert ist, um den Kolben (114) aufzunehmen; und
eine Baugruppe nach Anspruch 1;
wobei der Zylinderkopf (104) an einem Ende des Zylinderblocks angeordnet ist, derart, dass der Zylinderkopf (104), der Kolben (114) und die Zylinderbohrung (108) eine Hauptbrennkammer (116) definieren.

7. Motor (100) nach Anspruch 6, wobei die Flammendeckfläche (124) einen zentralen Abschnitt (142) einschließt und das Durchgangsloch (150) durch den zentralen Abschnitt (142) verläuft.

8. Motor (100) nach Anspruch 6, wobei die Spitze (168) der Vorkammer (160) eine Vielzahl von Öffnungen (172) einschließt, die in verschiedenen Ebenen und in verschiedenen Ausrichtungen an der Spitze (168) der Vorkammer (160) angeordnet sind.

9. Motor (100) nach Anspruch 6, wobei die Flammendeckfläche (124) eine konvexe Form aufweist und wobei der Scheitelabschnitt (145) angrenzend an das im Zylinderkopf (104) vorhandene Durchgangsloch (150) ausgebildet ist.

## Revendications

1. Ensemble comprenant une préchambre (160) et une culasse de cylindre (104), la culasse de cylindre (104) configurée pour être assemblée lors de l'utilisation à une extrémité d'un bloc-cylindre d'un moteur (100), le bloc-cylindre (106) ayant un alésage de cylindre (108) et un piston (114) reçu en son sein pour définir une chambre de combustion principale (116) ;
la préchambre (160) incluant :
une surface interne de chambre (170), et
un bout (168) ;
la surface interne de chambre (170) définissant une enceinte de mélange (162) ;
le bout (168) de la préchambre (160) incluant une pluralité d'orifices (172) configurés lors de l'utilisation pour transférer des jets d'air-carburant enflammés de la préchambre (160) à la chambre de combustion principale (116) ;
la culasse de cylindre (104) comprenant :
une surface interne (144) définissant un trou traversant (150) qui s'étend à travers une largeur de la culasse de cylindre (104), et
une surface de pare-flamme (124) définissant un profil (138) s'étendant lors de l'utilisation dans la chambre de combustion principale (116) et définissant une périphérie externe (140), dans lequel une profondeur d'extension du profil (138) dans la chambre de combustion principale (116) est minimale au niveau de la périphérie externe (140) et ladite profondeur de la surface de pare-flamme (124) augmente en direction du trou traversant (150) ;
la préchambre (160) étant couplée à la culasse de cylindre (104) de telle sorte que le bout (168) de la préchambre (160) est reçu dans le trou traversant (150) ;
**caractérisé en ce que**
une partie de point culminant (145) de la surface de pare-flamme (124) s'étend, lors de l'utilisation, au-delà du bout (168) de la préchambre (160) dans la chambre de combustion principale (116).

2. Ensemble selon la revendication 1 dans lequel,
la surface de pare-flamme (124) inclut une partie centrale (142) et le trou traversant (150) passe à travers la partie centrale (142).

3. Ensemble selon la revendication 1 dans lequel le trou traversant (150) est un trou traversant tronconique (150) qui diverge en direction de la chambre de combustion principale (116).

4. Ensemble selon la revendication 1, la culasse de cylindre (104) comprenant en outre un ou plusieurs passages internes (174) configurés pour recevoir au moins partiellement des charges de carburant injectées par la préchambre (160) dans lequel le ou les passages internes (174) sont l'un parmi des voies de passage cylindriques ou des voies de passage tronconiques divergentes.

5. Ensemble selon la revendication 1 dans lequel la surface de pare-flamme (124) a une forme convexe et la partie de point culminant (145) est formée adjacente au trou traversant (150) présent dans la culasse de cylindre (104).

6. Moteur (100) comprenant :
un piston (114) ;
un bloc-cylindre (106) définissant un alésage de cylindre (108), l'alésage de cylindre (108) configuré pour recevoir le piston (114) ; et
un ensemble tel que défini dans la revendication 1 ;
la culasse de cylindre (104) étant disposée à une extrémité du bloc-cylindre de telle sorte que la culasse de cylindre (104), le piston (114) et l'alésage de cylindre (108) définissent une chambre de combustion principale (116).

7. Moteur (100) selon la revendication 6 dans lequel la surface de pare-flamme (124) inclut une partie centrale (142) et le trou traversant (150) passe à travers la partie centrale (142).

8. Moteur (100) selon la revendication 6 dans lequel le bout (168) de la préchambre (160) inclut une pluralité d'orifices (172) agencés au niveau de plans différents et dans des orientations différentes sur le bout (168) de la préchambre (160).

9. Moteur (100) selon la revendication 6 dans lequel la surface de pare-flamme (124) a une forme convexe et dans lequel la partie de point culminant (145) est formée adjacente au trou traversant (150) présent dans la culasse de cylindre (104).
